# EUROPEAN PATENT SPECIFICATION

(11) **EP 0 677 232 B1**
(45) Date of publication and mention of the grant of the patent: **28.08.2002**
(21) Application number: 94931722.6
(22) Date of filing: 24.10.1994
(51) Int. Cl.: H04Q 7/22

(54) **A SYSTEM AND METHOD FOR ROUTING MESSAGES IN RADIO COMMUNICATION SYSTEMS**
SYSTEM UND VERFAHREN ZUR LEITWEGLENKUNG VON NACHRICHTEN IN FUNKKOMMUNIKATIONSSYSTEMEN
SYSTEME ET PROCEDE D'ACHEMINEMENT DE MESSAGES DANS DES SYSTEMES DE RADIOCOMMUNICATIONS

(30) Priority: 26.10.1993 US 141085
(43) Date of publication of application: 18.10.1995
(73) Proprietor: TELEFONAKTIEBOLAGET LM ERICSSON, 126 25 Stockholm (SE)
(72) Inventor: BODIN, Stig, Roland, S-163 56 Spaanga (SE); AASTRÖM, Bo, Arne, Waldemar, S-146 45 Tullinge (SE)
(74) Representative: Wennerholm, Kristian
(86) International application number: SE9400999
(87) International publication number: WO95012292

(56) References cited:
- WO-A-93/26131
- ITG-Fachbericht 124 Mobile Kommunikation Vortraege der ITG-Fachtagung vom 27, bis 29, September 1993 in NEU-ULM, HIENTZ et al.: "Der Short Message Service - ein neuer Dienst der Digitalen Mobilkommunikation", paragraphs 1.2, 1.3 and 1.5.

## Description

### BACKGROUND

The present invention generally relates to radiocommunication systems and methods for signalling in radiocommunication systems and, more particularly, an exemplary embodiment of the present invention based on the Global System for Mobile Communications (GSM) illustrates a method and system for routing messages.

The GSM describes a European standard for radiocommunication and the corresponding Public Land Mobile Network (PLMN) which is intended to provide uniformity so that users can access radiocommunication systems throughout Europe with minimal equipment compatibility problems. The GSM includes many services for subscribers, including a message function service called the Short Message Service which provides for the transmission of messages having up to 160 alphanumeric characters to be sent to a subscriber at his or her mobile unit.

This service is similar in many ways to a conventional paging function, but also has several differences. For example, if a phone is switched off, or otherwise unreachable, the message is stored and can later be sent to the designated subscriber when that subscriber is reconnected to the system. The message can originate by either being transmitted from a mobile unit to a service center for transmission to the subscriber or can simply be submitted by calling an operator at a service center who types the message into the system.

When a message is delivered from a service center to a mobile unit, under the GSM specification such a message is termed a "mobile terminated short message" (MTSM). If the message also originates at a mobile unit, the signal to the service center requesting the message is termed a "mobile originated short message" (MOSM). The conventional protocol for transmission of MTSMs is well established in the GSM, for example in the document entitled "GSM 09.02-Version 2" published in June 1992.

An MTSM originates after a request to service center 2, which is a node that is interfaced with a gateway mobile services switching center (GMSC) 4. The network port provided by gateway mobile services switching centers are typically further described as "interworking" when messages are being sent in the direction from the GMSC to a service center, however this additional term has been dropped to simplify the description of these centers in this document. The GMSC acts as a port into the public land mobile network. The service center stores message service profiles detailing the preferences and subscription details of each subscriber with respect to messages for each of the mobile units which it services. For example, a particular subscriber may prefer that messages be transmitted in the form of facsimiles rather than other types of media (e.g., a short message) or a subscriber may prefer that the messages which he or she generates be copied and stored prior to transmission.

The request to send a message to a subscriber can be transmitted to the service center 2 in many ways, e.g., by calling an operator in the service center, by facsimile message to the service center, etc. A message is then transmitted to the GMSC 4 using, for example, an interface specified in a document entitled "Technical Report, GSM 03.47." The recipient mobile station is identified by, for example, its MSISDN number.

Before the GMSC 4 can deliver the message through the chain of nodes to the base station (not shown) which is serving the recipient's mobile station, the GMSC 4 first interrogates the recipient's home location register (HLR) 6 to obtain routing information for the message. The HLR 6 stores data relating to subscribers including, for example, current location of the subscribers' equipment, directory number (MSISDN), radio number plan identification (e.g., International Mobile Subscriber Identity (IMSI)), supplementary service profiles and teleservice profiles. To interrogate the home location register 6, a GSM MAP message called "Send Routing Information for Short Message" is sent by the GMSC 4 to the home location register 6. The appropriate home location register can be determined using the recipient's MSISDN, e.g., by translating the MSISDN into a CCITT No. 7 address.

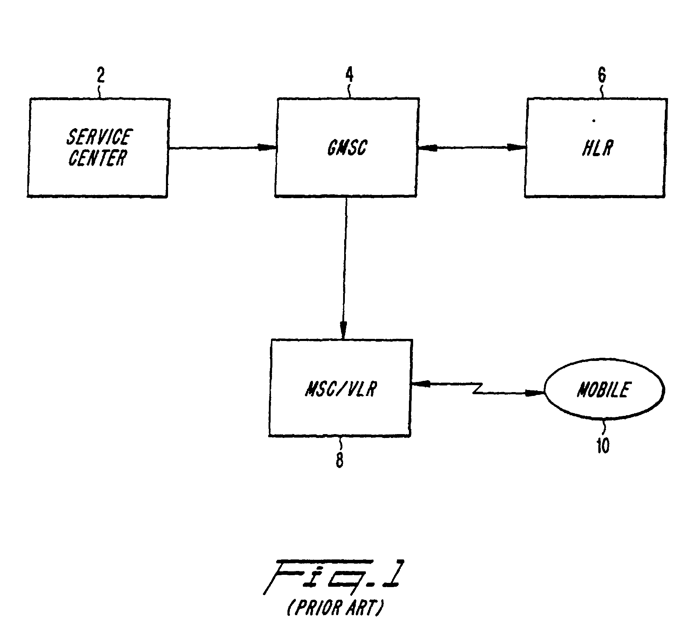

After receiving the routing information, the GMSC 4 forwards the message to the mobile services switching center (MSC) 8 which is currently serving the recipient's mobile station. The mobile services switching center provides an interface for switching functions and hardware control which are used when establishing a call. Note that for purposes of simplicity the visitor location register (VLR) has been illustrated in Figure 1 as being integrated with the mobile switching center, although in practice these two nodes can be physically separated. The VLR contains a copy of the information pertaining to a mobile unit which is stored in the mobile unit's home location register when the mobile unit has roamed into the service area of that VLR, the VLR being updated with information from a subscriber's home location register.

The message is then delivered to the mobile unit 10 via a base station (not shown) over the air interface. Acknowledgement signals are then transmitted back through the chain of nodes.

For MOSMs, on the other hand, the conventional routing procedure described by GSM is unclear. The specification identifies a procedure whereby the message is routed via one of the service centers, but no mention is made as to the whether the service center is that of the originator or the recipient.

A conventional system is disclosed in Hientz et al., A Short Message Service -- A New Service of Digital Mobile Communication, Reports of the Specialty Conference of the Information Technology Society, September 27-29, 1993. The Hientz et al. article discloses the Short Message Service (SMS) that offers mobile radio subscribers a possibility to receive and send messages of limited length. The system transmits messages according to the store and forward principle via an SMS service center. However, the Hientz et al. article discloses a system having a SMS service center, placed outside the mobile radio network, to carry out the message originator's preferences but does not disclose also interfacing with the message recipient's service center to facilitate carrying out the recipient's preferences.

### SUMMARY

These and other drawbacks and difficulties found in conventional radio communication systems, for example, the GSM system, are overcome according to the present invention. According to exemplary embodiments of the present invention, messages which originate at a mobile station are routed through both an originator's and a recipient's service center to take advantage of the information stored at both centers.

Routing the message through an originator's service center has, for example, an advantage that the originator of the message can design his or her personal message service, e.g., distribution lists,, storing copies of messages before they are sent, etc. Moreover, the originator's mobile unit will append the address of the originator's service center which is stored in the mobile or the originator's SIM card to the signal so that the originator need not enter a service center address for the message.

Routing the message through the recipient's service center, on the other hand, has the advantage that the recipient's preferences and current availability status can be taken into account when transmitting the message to the recipient's mobile unit. To enable such routing, the address of the recipient's service center must be known. According to the conventional systems and methods, the originating subscriber will have to know and specify not only the MSISDN number of the recipient, but also his or her service center address (or call an operator in his own service center, who may or may not know this address). According to the present invention this address can be stored in the HLR, so that the originator need not know this information.

Thus, according to the present invention, message routing receives the advantages that are obtained when a message is routed via the originator's service center as well as via the recipient's service center. Further, exemplary embodiments also describe an interface protocol between the recipient's home location register and the recipient's service center to selectively provide profile information which can be used for routing messages.

### BRIEF DESCRIPTION OF THE DRAWINGS

The foregoing objects, features and advantages of the present invention will be more readily understood upon reading the following detailed description in conjunction with the drawings in which:
Figure 1 illustrates a conventional block diagram of a node map for routing messages;
Figure 2 illustrates a second node map used to describe the routing of messages which originate at a mobile through only a recipient's service center; and
Figure 3 shows a node map for routing messages according to an exemplary embodiment of the present invention.

### DETAILED DESCRIPTION

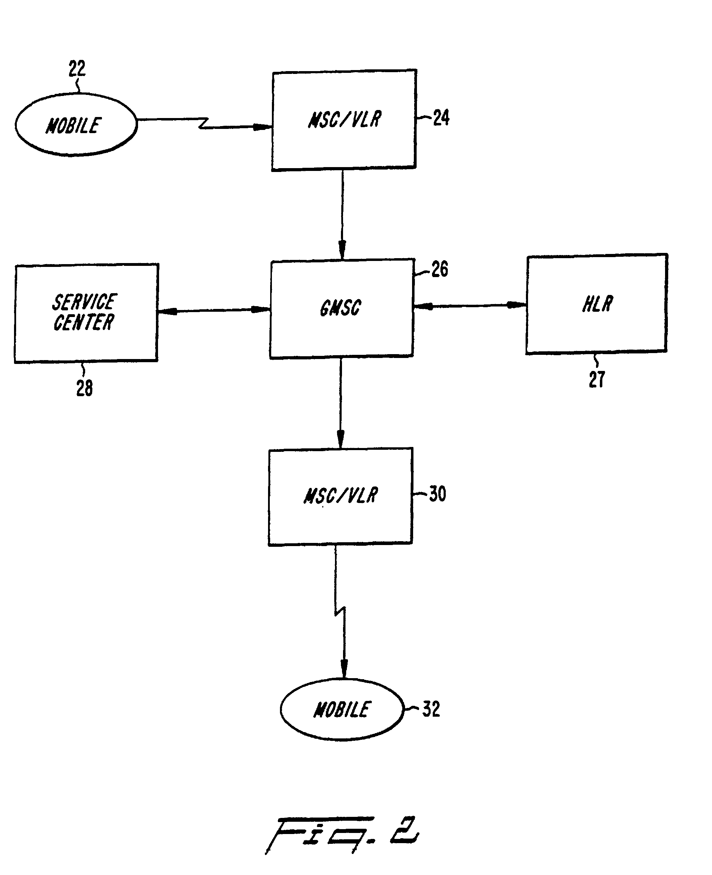

To illustrate the drawbacks associated with a procedure where messages are routed through only one of the service centers, routing through the recipient's service center will now be described with respect to Figure 2. A message originates at mobile 22 and is transmitted to that mobile station's servicing MSC/VLR 24. As mentioned above, with respect to Figure 1, the VLR can be physically separated from the MSC. If the MSC 24 is not also the gateway mobile services switching center which serves the recipient's mobile, the service center address received from the mobile unit is translated into routing information and the message can be forwarded to the GMSC 26. The GMSC 26 then sends the message to the recipient's service center 28 based on information received from HLR 27. Thereafter, the message is treated as an MTSM and sent through the GMSC 26 and MSC/VLR 30 to the recipient's mobile unit 32.

Thus, according to this routing method, MOSMs are routed through the recipient's service center but not through the originator's service center. However, this approach has, among other drawbacks, the drawback that information must be input by the originator to identify both the recipient and the recipient's service center and that message routing preferences of the originator cannot be taken into account in forwarding the message. Analogously, if the message were routed through only the originator's service center, the recipient's message routing preferences would not be taken into account.

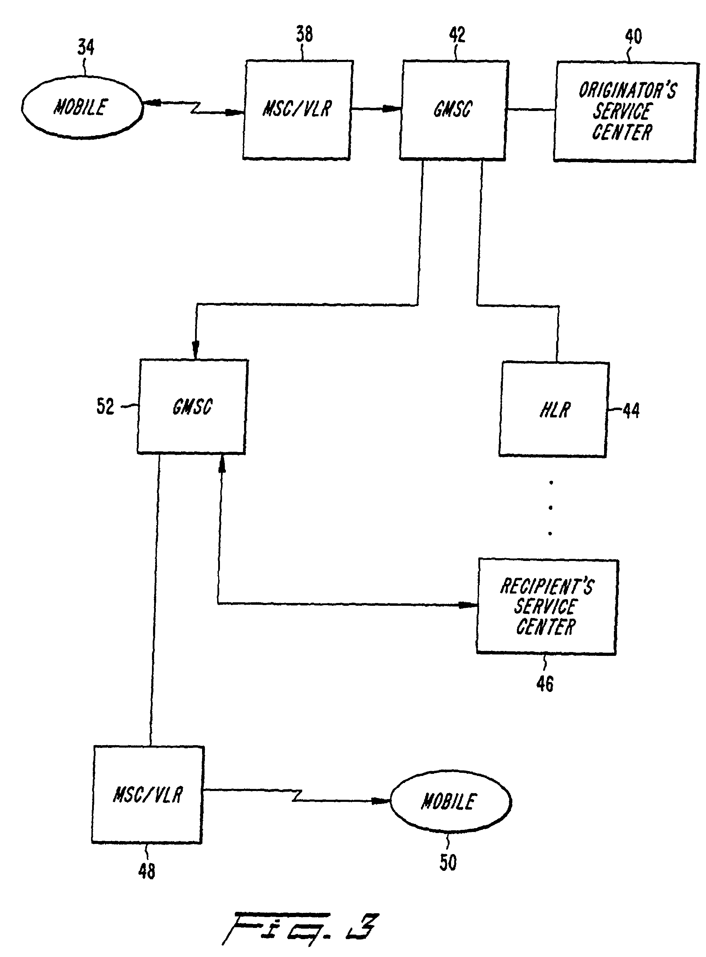

According to an exemplary embodiment of the present invention illustrated in Figure 3, a mobile originated message can pass through both an originator's service center and an intended recipient's service center. The message is transmitted from the mobile unit 34 to a base station (not shown) and passed on to the mobile services switching center/visitor location register 38 in a conventional manner. By storing the service center address of the originator, the message can be transmitted through the originator's service center 40 although the originator need only input an identifier of the recipient, e.g., by dialing the recipient's number. The address of the originator's service center 40 can be stored, for example, in the mobile or in a smart card which is removably attached to the mobile, and appended automatically to the transmission from the mobile,

Alternatively, the service center address can be sent to the MSC/VLR 38 from the HLR of the originator (not shown). This transmission can occur, for example, during location updating when the mobile enters the service area of the MSC.

The message is next routed to the appropriate gateway mobile services switching center 42, which is connected to the originator's service center 40, based on the address forwarded from the mobile 34. The message is sent to the originator's service center 40 where it is processed according to any procedures indicated by the originator's message subscriber profile stored in the service center 40. The message is then sent back to the GMSC 42. To route the message to the appropriate location/node that is currently serving the recipient's mobile, the GMSC 42 will interrogate the recipient's home location register 44 to retrieve routing information. Note that although the GMSC 42 is illustrated as being directly connected to HLR 44, the GMSC 42 interrogates the HLR 44 through the network and this direct connection is shown for clarity in Figure 3.

However, according to an exemplary embodiment of the present invention, the HLR 44 and recipient's service center 46 can communicate via a previously unknown and undefined interface. The protocol for this interface is herein called "SC-MAP" and is structured in a manner similar to the protocol known as the GSM 09.02 MAP. That is, SC-MAP can be structured using a CCITT No. 7 based protocol using MTP, SCCP and TCAP from the CCITT No. 7 protocol stack. The CCITT No. 7 signalling system is well known to those skilled in the art and, accordingly, is not futher discussed herein. Although this exemplary format for the communication between HLR 44 and service center 46 is chosen for its similarity to other communication formats, there has previously been no such interface between the recipient's HLR and service center in conventional systems, such as the GSM, and those skilled in the art will readily appreciate that other interface formats can also be used.

The HLR 44 can store an indication for each subscriber indicating whether that subscription includes the enhanced message service that the HLR-service center interface offers. This indication is herein called the Enhanced Message Service Indicator (EMSI). Further, a service center address for each subscriber can also be stored in the HLR 44.

When the HLR 44 is interrogated, e.g., by sending a MAP operation "Send Routing Information For SM", the HLR 44 checks the EMSI for that particular subscriber to see whether the recipient's service center 46 shall be interfaced or not. If the EMSI indicates that the service center shall be interrogated, the SC-MAP message, for example, a "Message Service Enquiry" signal, is sent to the service center 46. The protocol for the exemplary "Message Service Enquiry" is discussed in more detail below. When the service center 46 receives this message it checks the service profile for the subscriber in question to determine the preferences and status of that subscriber, for example, how the subscriber wants to be notified of messages at this particular time. This information is reported back to the HLR 44 in a return message.

If the subscriber profile stored in the service center 46 indicates that the MTSM procedure should be used to send the message to the subscriber, the HLR 44 returns routing information indicating the MSC/VLR 48 which services the area where the recipient's mobile 50 is currently located to the interrogating GMSC 42, and the message is transmitted as an MTSM as described above.

If the subscriber profile indicates that mapping to another message type, e.g., to facsimile, is to be performed, the MTSM is not forwarded to the MSC/VLR 48 where the recipient's mobile 50 is located, but instead is forwarded to the recipient's service center 46 where the translation of the MTSM to the requested message service is performed. To enable this forwarding, the address of the recipient's service center 46 is returned to the interrogating GMSC 42 by the HLR 44. After receiving the message, the recipient's service center 46 is now responsible for the MTSM delivery and will inform the originator's service center 40 that the message is being delivered so that the originator's service center does not resend the message. After translating the message or otherwise adapting the message to the recipient's preferences, the message is forwarded from the recipient's service center 46 to the specified equipment which can, for example, be mobile 50. The actual mapping or translation of the message into the requested service and subsequent delivery, e.g., to the recipient's mobile 50, can be performed using conventional techniques which are outside the scope of the present invention and are, therefore, not further discussed herein.

The foregoing Message Service Enquiry operation can be structured as, for example, set forth below using the Abstract Syntax Notation No. 1 specified by CCITT.

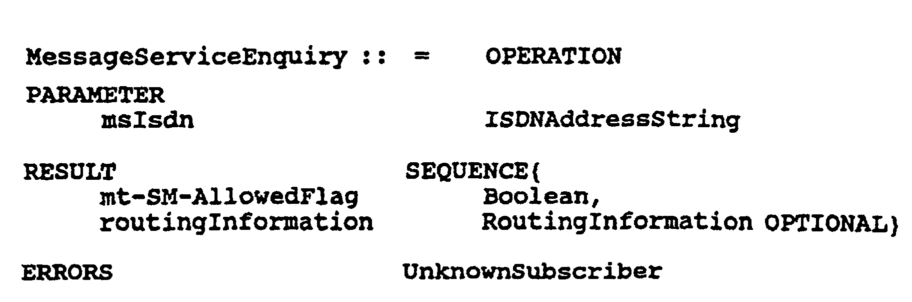

As mentioned above, this exemplary operation can be invoked to interface the HLR 44 and service center 46 if the subscriber has access to the enhanced message service. The RESULT variable mt-SM-AllowedFlag is returned in response to the PARAMETER mslsdn being passed. If, for example, the subscriber profile stored in the recipient's service center indicates that routing the message as an MTSM is appropriate, then the mt-SM-AllowedFlag is returned with a TRUE value. The optional routing information variable will not be returned since the message need not be routed through the recipient's service center.

If, on the other hand, the recipient subscriber's profile indicates that some procedure other than that used to route an MTSM is to be used for routing the message, then the mt-SM-AllowedFlag is set to FALSE and the address of the recipient's service center, or B-number relating thereto, is returned in the optional routing variable. As mentioned earlier, however, this protocol and functional implementation are simply an example of one way in which the interface between the HLR and service center can be implemented and those skilled in the art will understand that many other types of interfaces could also be implemented within the scope of the present invention. For example, the HLR could store all of the message service related subscriber data and instruct the service center as to how to perform in different traffic situations, for example, conversion from one media to another, e.g., from an MTSM to a facsimile.

While the present invention has been described using the foregoing exemplary embodiments, these embodiments are intended to be illustrative in all respects, rather than restrictive of the present invention. For example, although the term "mobile" has been used throughout this specification, the present invention can be applied to systems and methods wherein any type of remote equipment which supports the message service is originating or receiving the message, e.g., a portable unit, a personal digital assistant, a data terminal, etc.

Moreover, although the foregoing exemplary embodiments refer to messages which originate at "mobiles", those skilled in the art will also recognize that the present invention can also be applied where other types of equipment originate the message, e.g., PSTNs or data networks. Further, although the present invention has been exemplified by embodiments which refer to the GSM, the present invention is equally applicable to any system or standard (e.g., PDC or ADC) wherein messages may be routed using methods or systems that include service centers or analogous equipment. Thus, the scope of the present invention is instead set forth by the appended claims and encompasses any and all equivalents and modifications embraced thereby.

## Claims

1. A method for routing a short message from an originator (34) to a recipient (50) comprising the steps of
sending said message from a first switching center (42) to an originator's short message service center (40) which handles messages that are transmitted by said originator (34); and
interrogating a home location register (44) of said recipient to obtain first routing information for the message,
**characterized by** the steps of:
interrogating a recipient's short message service center (46) to obtain second routing information if said interrogating said home location register step indicates the inclusion of second routing information, wherein said second routing information includes said recipient's subscriber profile which includes routing preferences of said recipient;
informing a second switching center (52) of said first routing information and of said second routing information, if said second routing information is obtained by said interrogating said recipient's service center step; and
routing said message according to said first routing information and said second routing information, if said second routing information is available.

2. The method of claim 1, further **characterized by** the step of: storing, prior to said sending step, addresses of subscribers service centers in said home location register (44).

3. The method of claim 1, wherein said step of sending said message is further **characterized by** the step of: appending an address of said originator's service center (40) which is stored in an originator's equipment.

4. The method of claim 3, wherein said originator's equipment includes at least one of: a smart card, a SIM and a mobile unit.

5. The method of claim 2, further **characterized by** the step of:
informing said first switching center (42) of an address of said originator's service center (40) which has been retrieved from said home location register(44).

6. The method of claim 1, wherein said step of interrogating said recipient's service center is further **characterized by** the step of:
determining whether said message is to be routed according to a standard procedure.

7. The method of claim 6, wherein said routing step is performed according to a result of said determining step, to either said recipient (50) or to said recipient's service center (46).

8. The method of claim 7, further **characterized by** the step of: if said message is routed to said recipient's service center (46), processing said message according to said recipient's subscriber profile.

9. The method of claim 1, wherein said step of interrogating said home location register is further **characterized by**:
determining if said recipient's service center (46) can be interfaced from said home location register (44).

10. The method of claim 9, wherein said step of interrogating said recipient's service center is selectively performed based on a result of said determining step.

11. The method of claim 1, wherein said step of interrogating said recipient's service center is performed from said home location register (44).

12. A radiocommunication system for transmitting a short message from an originator (34) to a recipient (50) comprising
an originator's short message service center (40);
means for storing a subscriber profile of said originator, wherein said originator's subscriber profile includes preferences of said originator (34);
a recipient's short message service center (46) means for storing a subscriber profile of said recipient (50), wherein said recipient's subscriber profile includes preferences of said recipient; and
interrogation means for interrogating a home location register (44) to obtain location information relating to said recipient (50);
**characterized by**:
interrogation means for interrogating said recipient's short message service center (46) to obtain said subscriber profile of said recipient, if said interrogation means for interrogating said recipient's home location register indicates the inclusion of said recipient's subscriber profile; and
means for forwarding said message from said originator (34) to said recipient (50) using originator's subscriber profile information received from said originator's service center (40) and using receiver's subscriber profile information, if available and received from said recipient's service center (46).

13. The radiocommunication system of claim 12, wherein said forwarding means is further **characterized by**:
a gateway mobile services switching center means (42) for receiving said message from a remote unit (34) and sending said message to said originator's service center (40) for processing according to subscriber profile information.

14. The radiocommunication system of claim 13, wherein said gateway mobile services switching center means (42) is also for interrogating said home location register means (44) to obtain routing information for said message.

15. The radiocommunication system of claim 14, wherein said forwarding means is further **characterized by**:
an interface means for selectively allowing recipient's subscriber profile information to be transferred between said home location register means (44) and said recipient's service center (46).

16. The radiocommunication system of claim 15, wherein said home location register means (44) is also for determining if said recipient (50) has subscribed to an enhanced message service and to actuate said interface means to transfer recipient's subscriber profile information based on a result of the determination.

17. The radiocommunication system of claim 16, wherein:
said gateway mobile services switching center (42) routes said message to either said recipient (50) or said recipient's service center (46) based on said recipient's subscriber profile information.

18. The radiocommunication system of claim 12, wherein said forwarding means is further **characterized by**:
means for retrieving an address of said originator's service center (40) which is stored in an originator's equipment.

19. The radiocommunication system of claim 18, wherein said originator's equipment includes at least one of:
a smart card, a SIM and a mobile unit.

20. The radiocommunication system of claim 12, is further **characterized by**:
home location register means (44) for storing service center addresses of subscribers.

21. The radiocommunication system of claim 20, wherein said forwarding means is further **characterized by**:
means for informing said switching center (42) of an address of said recipient's service center (46) which has been retrieved from said home location register (44).

## Patentansprüche

1. Verfahren zum Routen einer Kurznachricht von einem Absender (34) an einen Empfänger (50), umfassend die folgenden Schritte:
Senden der Nachricht von einer ersten Vermittlungsstelle (42) an das Dienstezentrum für Kurznachrichten eines Absenders (40), welches vom Absender (34) übertragene Nachrichten betreut; und
Abfrage einer Besucherdatei (44) des Empfängers zum Erhalt erster Routing-Informationen für die Nachricht,
**gekennzeichnet durch** folgende Schritte:
Abfrage eines Dienstezentrums für Kurznachrichten des Empfängers (46) zum Erhalt zweiter Routing-Informationen, sobald der Schritt der Abfrage der Besucherdatei das Vorhandensein zweiter Routing-Informationen anzeigt, wobei die zweiten Routing-Informationen das Routing-Präferenzen des Empfängers enthaltende Teilnehmerprofil des Empfängers enthalten;
Mitteilen der ersten Routing-Informationen sowie der zweiten Routing-Informationen an eine zweite Vermittlungsstelle (52), sobald die zweiten Routing-Informationen **durch** den Schritt der Abfrage des Dienstezentrums des Empfängers erhalten werden; und
Routen der Nachricht gemäß den ersten Routing-Informationen und den zweiten Routing-Informationen, sobald die zweiten Routing-Informationen zur Verfügung stehen.

2. Verfahren nach Anspruch 1, weiterhin **gekennzeichnet durch** den folgenden Schritt:
Speichern von Adressen der Dienstezentren von Teilnehmern in der Heimatdatei (44) vor dem Sendeschritt.

3. Verfahren nach Anspruch 1, wobei der Schritt der Nachrichtenversendung weiterhin durch den folgenden Schritt gekennzeichnet ist:
Anfügen einer in einem Gerät des Absenders gespeicherten Adresse des Dienstezentrums des Absenders (40).

4. Verfahren nach Anspruch 3, wobei das Gerät des Absenders wenigstens eine der folgenden Einheiten enthält: eine Smart Card, eine SIM und eine Mobileinheit.

5. Verfahren nach Anspruch 2, weiterhin **gekennzeichnet durch** den folgenden Schritt:
Mitteilen einer Adresse des Dienstezentrums des Absenders (40) an die erste Vermittlungsstelle (42), die von der Besucherdatei (44) erfaßt worden ist.

6. Verfahren nach Anspruch 1, wobei der Schritt der Abfrage des Dienstezentrums des Empfängers weiterhin **gekennzeichnet ist durch** den folgenden Schritt:
Bestimmen, ob die Nachricht gemäß einem Standardverfahren geleitet werden soll.

7. Verfahren nach Anspruch 6, wobei der Schritt des Routens gemäß einem Resultat des Bestimmungsschrittes ausgeführt wird, entweder an den Empfänger (50) oder an das Dienstezentrum des Empfängers (46).

8. Verfahren nach Anspruch 7, weiterhin **gekennzeichnet durch** den folgenden Schritt:
Bearbeiten der Nachricht gemäß dem Teilnehmerprofil des Empfängers, sobald die Nachricht an das Dienstezentrum des Empfängers (46) geleitet wird.

9. Verfahren nach Anspruch 1, wobei der Schritt der Abfrage der Heimatdatei weiterhin **gekennzeichnet ist durch**:
Bestimmen, ob eine Schnittstelle von der Heimatdatei (44) zum Dienstezentrum des Empfängers (46) gebildet werden kann.

10. Verfahren nach Anspruch 9, wobei der Schritt der Abfrage des Dienstezentrums des Empfängers wahlweise aufgrund eines Resultats des Bestimmungsschrittes ausgeführt wird.

11. Verfahren nach Anspruch 1, wobei der Schritt der Abfrage des Dienstezentrums des Empfängers von der Heimatdatei (44) aus ausgeführt wird.

12. Funkkommunikationssystem zum Übertragen einer Kurznachricht von einem Absender (34) an einen Empfänger (50), umfassend:
ein Dienstezentrum für Kurznachrichten des Absenders (40);
Mittel zum Speichern eines Teilnehmerprofils des Absenders, wobei das Teilnehmerprofil des Absenders Präferenzen des Absender (34) enthält;
ein Dienstezentrum für Kurznachrichten des Empfängers (46);
Mittel zum Speichern eines Teilnehmerprofils des Empfängers (50), wobei das Teilnehmerprofil des Empfängers Präferenzen des Empfängers enthält;
Abfragemittel zum Abfragen einer Heimatdatei, um Standortinformationen in bezug auf den Empfänger (50) zu erhalten;
**gekennzeichnet durch**
Abfragemittel zum Abfragen des Dienstezentrums für Kurznachrichten des Empfängers (46) zum Erhalten des Teilnehmerprofils des Empfängers, sobald das Abfragemittel zum Abfragen der Heimatdatei des Empfängers das Vorhandensein des Teilnehmerprofils des Empfängers anzeigt; und
Mittel zum Weiterleiten der Nachricht vom Absender (34) an den Empfänger (50) unter Verwendung der vom Dienstezentrum des Absenders (40) erhaltenen Teilnehmerprofilinformationen des Absender sowie unter Verwendung der Teilnehmerprofilinformationen des Empfängers, sobald diese vom Dienstezentrum des Empfängers (46) verfügbar und erhalten worden sind.

13. Funkkommunikationssystem nach Anspruch 12, wobei das Mittel zum Weiterleiten weiterhin **gekennzeichnet ist durch**:
eine Durchgangsvermittlungsstelle (42) zum Erhalten der Nachricht von einer entfernten Einheit (34) sowie zum Senden der Nachricht an das Dienstezentrum des Absenders (40) zur Bearbeitung gemäß den Teilnehmerprofilinformationen.

14. Funkkommunikationssystem nach Anspruch 13, wobei die Durchgangsvermittlungsstelle (42) gleichzeitig zur Abfrage der Heimatdatei (44) zum Erhalten von Routing-Informationen für die Nachricht dient.

15. Funkkommunikationssystem nach Anspruch 14, wobei das Mittel zum Weiterleiten weiterhin **gekennzeichnet ist durch**:
ein Mittel zur Schnittstellenbildung zum wahlweisen Ermöglichen der Übertragung der Teilnehmerprofilinformationen des Empfängers zwischen der Heimatdatei (44) und dem Dienstezentrum des Empfängers (46).

16. Funkkommunikationssystem nach Anspruch 15, wobei die Heimatdatei (44) auch zum Bestimmen dient, ob der Empfänger (50) Teilnehmer eines verbesserten Nachrichtendienstes ist sowie zum Betätigen der Schnittstelle zur Übertragung der Teilnehmerprofilinformationen des Empfängers aufgrund eines Resultats der Bestimmung.

17. Funkkommunikationssystem nach Anspruch 16, wobei die Durchgangsvermittlungsstelle (42) die Nachricht entweder zum Empfänger (50) oder zum Dienstezentrum des Empfängers (46) aufgrund der Teilnehmerprofilinformationen des Empfängers leitet.

18. Funkkkommunikationssystem nach Anspruch 12, wobei das Mittel zum Weiterleiten weiterhin **gekennzeichnet ist durch**:
Mittel zum Erfassen einer Adresse des Dienstezentrums des Absenders (40), die im Gerät des Absenders gespeichert ist.

19. Funkkommunikationssystem nach Anspruch 18, wobei das Gerät des Absenders wenigstens eine der folgenden Einheiten enthält:
eine Smart Card, eine SIM und eine Mobileinheit.

20. Funkkommunikationssystem nach Anspruch 12, weiterhin **gekennzeichnet durch**:
eine Heimatdatei (44) zum Speichern von Dienstezentrumadressen von Teilnehmern.

21. Funkkommunikationssystem nach Anspruch 20, wobei das Mittel zum Weiterleiten weiterhin **gekennzeichnet ist durch**:
Mittel zum Mitteilen einer Adresse des Dienstezentrums des Empfängers (46) an Vermittlungsstelle (42), die von der Heimatdatei (44) erfaßt worden ist.

## Revendications

1. Procédé de routage d'un message court envoyé d'un expéditeur (34) à un destinataire (50), comprenant les étapes suivantes:
transmission du message effectué d'un premier centre de commutation (42) au centre de services des messages courts d'un expéditeur (40), centre qui est chargé des messages transmis par l'expéditeur (34), et
interrogation d'un enregistreur de localisation pour visiteurs (44) du destinataire en vue d'obtention des premières informations de routage pour le message,
**caractérisé par** les étapes suivantes:
interrogation d'un centre de services pour messages courts du destinataire (46) en vue d'obtention des deuxièmes informations de routage dès que l'étape d'interrogation de l'enregistreur de localisation pour visiteurs fait état de la présence des deuxièmes informations de routage qui contiennent le profil d'abonné du destinataire lui-même comprenant ses préférences de routage; communication des premières informations de routage ainsi que des deuxièmes informations de routage à un deuxième centre de commutation (52) dès que sont reçues les deuxièmes informations de routage par l'étape de la demande auprès du centre de services du destinataire; et
routage du message selon les premières informations de routage et les deuxièmes informations de routage dès qu'on dispose des deuxièmes informations de routage.

2. Procédé selon la revendication 1, caractérisé de plus par l'étape suivante:
mémorisation des adresses des centres de services des abonnés dans l'enregistreur de localisation nominal (44) avant l'étape de la transmission.

3. Procédé selon la revendication 1 où l'étape de la transmission du message se
caractérise de plus par l'étape suivante:
adjonction d'une adresse du centre de services de l'expéditeur (40) qui se trouve mémorisée dans un appareil de l'expéditeur.

4. Procédé selon la revendication 3 où l'appareil de l'expéditeur comprend au moins une des unités suivantes: une Smart Card, une SIM et un terminal mobile.

5. Procédé selon la revendication 2 se caractérisant de plus par l'étape suivante:
communication d'une adresse du centre de services de l'expéditeur (40) au premier centre de commutation (42) qui a été détecté par l'enregistreur de localisation pour visiteurs (44).

6. Procédé selon la revendication 1 où l'étape d'interrogation du centre de services du destinataire se caractérise de plus par l'étape suivante:
déterminer si le message doit être acheminé suivant un procédé standard.

7. Procédé selon la revendication 6 où l'étape du routage s'effectue suivant un résultat de l'étape de détermination, soit au destinataire (50), soit au centre de services du destinataire (46).

8. Procédé selon la revendication 7, se caractérisant de plus par l'étape suivante:
traitement du message selon le profil d'abonné du destinataire, dès que le message est acheminé au centre de services du destinataire (46).

9. Procédé selon la revendication 1 où l'étape de l'interrogation de l'enregistreur de localisation nominal est de plus **caractérisée par**:
déterminer si une interface peut être créée de l'enregistreur de localisation nominal (44) au centre de services du destinataire (46).

10. Procédé selon la revendication 9 où l'étape de l'interrogation du centre de services du destinataire s'effectue au choix selon un résultat de l'étape de détermination.

11. Procédé selon la revendication 1 où l'étape de l'interrogation du centre de services du destinataire s'effectue à partir de l'enregistreur de localisation nominal (44).

12. Système de communication radio permettant de transmettre un message court d'un expéditeur (34) à un destinataire (50), comprenant:
un centre de services pour les messages courts de l'expéditeur (40);
des moyens de mémorisation d'un profil d'abonné de l'expéditeur, où le profil d'abonné de l'expéditeur contient des préférences de l'expéditeur (34);
un centre de services pour les messages courts du destinataire (46);
des moyens de mémorisation d'un profil d'abonné du destinataire (50), où le profil d'abonné du destinataire contient des préférences du destinataire;
des moyens d'interrogation pour interroger un enregistreur de localisation nominal afin d'obtenir des informations de localisation ayant trait au destinataire (50);
**caractérisé par**
des moyens d'interrogation pour interroger le centre de services pour messages courts du destinataire (46) afin d'obtenir le profil d'abonné du destinataire, dès que le moyen d'interrogation pour interroger l'enregistreur de localisation nominal du destinataire signale la présence du profil d'abonné du destinataire; et
des moyens d'acheminement du message de l'expéditeur (34) au destinataire (50) avec recours aux informations sur le profil d'abonné de l'expéditeur qui ont été reçues du centre de services de l'expéditeur (40) et avec recours aux informations sur le profil d'abonné du destinataire dès que celles-ci sont mises à disposition par et reçues du centre de services du destinataire (46).

13. Système de communication radio selon la revendication 12 où le moyen d'acheminement est de plus **caractérisé par**:
un central de transit (42) qui permet de recevoir le message d'une unité éloignée (34) ainsi que d'envoyer au centre de services de l'expéditeur (40) le message qui y est alors traité selon les informations sur le profil d'abonné.

14. Système de communication radio selon la revendication 13 où le central de transit (42) sert simultanément à interroger l'enregistreur de localisation nominal (44) en vue d'obtenir des informations de routage pour le message.

15. Système de communication radio selon la revendication 14 où le moyen d'acheminement est de plus **caractérisé par**:
un moyen pour créer une interface permettant au choix la transmission des informations sur le profil d'abonné du destinataire entre l'enregistreur de localisation nominal (44) et le centre de services du destinataire (46).

16. Système de communication radio selon la revendication 15 où l'enregistreur de localisation nominal (44) sert également à déterminer si le destinataire (50) est abonné à un service de messagerie perfectionnée ainsi qu'à activer l'interface de transmission des informations sur le profil d'abonné du destinataire en raison d'un résultat de la détermination.

17. Système de communication radio selon la revendication 16 où le central de transit (42) achemine le message soit au destinataire (50), soit au centre de services (46) en raison des informations sur le profil d'abonné du destinataire.

18. Système de communication radio selon la revendication 12 où le moyen d'acheminement est de plus **caractérisé par**:
un moyen pour détecter une adresse du centre de services de l'expéditeur (40) qui est mémorisée dans l'appareil de l'expéditeur.

19. Système de communication radio selon la revendication 18 où l'appareil de l'expéditeur comprend au moins une des unités suivantes:
une Smart Card, une SIM et un terminal mobile.

20. Système de communication radio selon la revendication 12 caractérisé de plus par:
un enregistreur de localisation nominal (44) pour mémoriser des adresses de centres de services des abonnés.

21. Système de communication radio selon la revendication 20 où le moyen d'acheminement est de plus **caractérisé par**:
un moyen de communication d' une adresse du centre de services du destinataire (46) au central de commutation (42) qui a été détecté par l'enregistreur de localisation nominal (44).
